# EUROPEAN PATENT APPLICATION

(11) **EP 4 270 314 A1**
(43) Date of publication of application: **01.11.2023**
(21) Application number: 21910785.1
(22) Date of filing: 21.12.2021
(51) Int. Cl.: G06T 7/12, G01N 21/90

(54) **AIR BUBBLE IDENTIFICATION DEVICE, AIR BUBBLE IDENTIFICATION METHOD, AND FOREIGN MATTER DETECTION SYSTEM**

(30) Priority: 24.12.2020 JP 2020215149
(71) Applicant: Syntegon Technology K.K., Tokyo 150-0002 (JP)
(72) Inventor: JIANG Jun, Tokyo 150-0002 (JP)
(74) Representative: Klunker IP Patentanwälte PartG mbB
(86) International application number: PCT/JP2021/047328
(87) International publication number: WO 2022/138643

(57) **Abstract**

A plurality of reference lines are set with regard to a blob (78) in a target image. The blob (78) is structured from an outside section serving as a low-luminance section, and an inside section (84) serving as a high-luminance section. An air bubble determination condition includes an edge pair condition. The edge pair condition is determined to be satisfied if two edge pairs EP1, EP2 are detected on any one of the reference lines (100). The air bubble determination condition may include an edge gap condition.

## Description

### TECHNICAL FIELD

The present disclosure relates to a bubble identifying device, a bubble identifying method, and a foreign obj ect detecting system, and in particular to a technique of identifying a bubble floating in a liquid.

### BACKGROUND

Foreign object detecting systems are configured to detect a foreign object contained in an object to be inspected. When the object to be inspected is a liquid, a foreign object floating in the liquid is detected. For example, in pharmaceutical factories, pharmaceutical drugs stored in individual containers are inspected using the foreign object detecting systems. The containers include a syringe, a vial, an ampoule, or the like. The foreign object includes a metal piece, a resin piece, a rubber piece, a fiber, or the like that is mixed into a pharmaceutical drug in a manufacturing process. The foreign object detecting systems are also used in inspections, such as beverage inspections and chemical agent inspections.

Atypical foreign object detecting system is configured to capture an image of an inspection target, and detect a foreign object by analyzing the captured image of the inspection target. In detection of a foreign object, flaws and soils on the container can be factors that cause erroneous detection. In this connection, Patent Document 1 discloses a technique of comparing a target image with a reference image to discriminate between a non-floating object and a floating object.

Further, in detection of a foreign object, a bubble flowing in a liquid can also become a factor that causes erroneous detection. In this connection, Patent Document 2 discloses a technique of discriminating between a bubble and a foreign object based on a feature amount of the bubble (more specifically, a bubble image). Patent Documents 1 and 2 disclose no technique for identifying a bubble image by means of a brightness pattern specific to bubble images, and in particular, discloses no technique for identifying a bubble image by means of a reference line for use in analysis of the brightness pattern.

### CITATION LIST

### PATENT LITERATURE

Patent Document 1: JP 2004-226228 A
Patent Document 2: JP 2004-354100 A

### SUMMARY

### TECHNICAL PROBLEM

An object of the present disclosure is to identify a bubble contained in an inspection target in a simple and accurate manner. Another object of the present disclosure is to enhance detection accuracy in detecting a foreign object contained in an inspection target.

### SOLUTION TO PROBLEM

A bubble identifying device according to the present disclosure includes a setting unit configured to set at least one reference line on a blob in an image, the at least one reference line traversing the blob, and an identifying unit configured to identify the blob as a bubble image when a brightness distribution on the at least one reference line satisfies a bubble determination condition, in which the bubble determination condition includes an edge pair condition, and the edge pair condition is a condition which requires that two edge pairs are contained in a brightness distribution of interest.

A bubble identifying method according to this disclosure includes steps of setting a plurality of reference lines on a blob in an image, and identifying the blob as a bubble image when n brightness distributions among a plurality of brightness distributions on the plurality of reference lines satisfy a bubble determination condition (where n is an integer greater than or equal to 1), in which the bubble determination condition includes an edge pair condition, and the edge pair condition is a condition which requires that two edge pairs are contained in a brightness distribution of interest.

A foreign object detecting system according to this disclosure includes an imaging device configured to capture an image of an inspection target, and a processor configured to process the image acquired by the imaging device, in which the processor is configured to preprocess the image to exclude a non-floating blob, set a reference line set on a floating blob in the preprocessed image, identify the floating blob as a bubble image when n brightness distributions in a brightness distribution set on the reference line set satisfy a bubble determination condition (where n is an integer greater than or equal to 1), and determine the floating blob as a foreign object image when the floating blob is not identified as a bubble image, and in which the bubble determination condition includes an edge pair condition, and the edge pair condition is a condition which requires that two edge pairs are contained in a brightness distribution of interest.

### BRIEF DESCRIPTION OF DRAWINGS

[FIG. 1] FIG. 1 is a diagram showing an example configuration of a foreign object detecting system according to an embodiment.
[FIG. 2] FIG. 2 is a diagram showing a plurality of types of bubble images.
[FIG. 3] FIG. 3 is a diagram showing a plurality of types of foreign object images.
[FIG. 4] FIG. 4 is a diagram showing a preprocess.
[FIG. 5] FIG. 5 is a diagram showing a region of interest.
[FIG. 6] FIG. 6 is a diagram showing a reference line set.
[FIG. 7] FIG. 7 is a diagram showing edge detection performed on a bubble image.
[FIG. 8] FIG. 8 is a diagram showing another reference line set.
[FIG. 9] FIG. 9 is a diagram showing edge detection performed on a foreign object image.
[FIG. 10] FIG. 10 is a diagram showing edge detection performed on a special bubble image.
[FIG. 11] FIG. 11 is a diagram showing a foreign object determining method including a bubble identifying method.
[FIG. 12] FIG. 12 is a flowchart showing an example of operation.

### DESCRIPTION OF EMBODIMENTS

Hereinafter, an embodiment will be explained with reference to the drawings.

### 1. Overview of Embodiment

A bubble identifying device according to the embodiment includes a setting unit and an identifying unit. The setting unit sets at least one reference line on a blob in an image, the at least one reference line traversing the blob. The identifying unit identifies the blob as a bubble image when a brightness distribution on the at least one reference line satisfies a bubble determination condition. The bubble determination condition includes an edge pair condition. The edge pair condition is a condition which requires that two edge pairs are contained in a brightness distribution of interest.

Bubble images have brightness patterns which have nonuniformity or have a structure. Such a bubble image is broadly divided into an outer section and an inner section. In general, a clear brightness difference is created between the outer section and the inner section. A clear brightness difference is also created between the outer section and a background. On the other hand, foreign obj ect images have brightness patterns which have uniformity or have no structure. In general, a clear brightness difference is created between the foreign object image and the background, whereas there is no clear brightness difference inside the foreign object image.

The above-described configuration is designed to distinguish between a bubble image and a foreign object image based on a difference between the brightness pattern of a bubble image and the brightness pattern of a foreign object image. Specifically, a reference line is set on a blob (a target image to be distinguished) so as to traverse the blob. When the reference line traverses both the outer section and the inner section of a bubble image, two edge pairs (two brightness difference pairs) are present on the reference line. That is, when edge detection is repeatedly performed on the reference line from its one end to the other end, a first edge pair is detected in the process of firstly traversing the outer section, and a second edge pair is detected in the process of secondly traversing the outer section. When the edge pair condition is included in the bubble determination condition, the blob can be identified as a bubble image upon determination of the edge pair condition being satisfied. In a case where the reference line is set on a foreign object image having uniformity, only two edges are detected on the reference line. For this reason, a distinction can be made between the bubble image and the foreign object image.

In consideration of variety of forms and orientations of bubble images, a plurality of reference lines are set on a blob in an embodiment. This can increase a possibility of identifying as bubble images a blob having a small inner section and a blob having an outer section which is partially missing. A condition other than the edge pair condition may be included in the bubble determination condition in order to enhance the accuracy of identifying the bubble image. When an identification process is applied to each of blobs contained in a target image, an amount of computations can be reduced to a smaller amount than in a case where the identification process is performed on the target image as a whole.

In an embodiment, the setting unit establishes a reference line set consisting of a plurality of reference line arrays which have a traversing relationship with a blob. The identifying unit identifies the blob as a bubble image when n brightness distributions in a brightness distribution set on the reference line set satisfy a bubble identification condition (where n is an integer greater than or equal to 1).

The use of the reference line set enables accurate identification of bubble images having various forms. The value of n may be defined as 1. When there is a possibility that erroneous identification may occur, 2 or greater numerical values may be set to n. Various conditions, such as the number of reference lines constituting a reference line array, and a reference line pitch in the reference line array, may be configured to be changeable depending on situations. According to this configuration, both improvement in identification accuracy and reduction in the amount of computations can be achieved at the same time.

In an embodiment, the reference line set includes a first reference line array consisting of a plurality of reference lines which are parallel to a first direction, and a second reference line array consisting of a plurality of reference lines which are parallel to a second direction intersecting the first direction. Although a missing part of a bubble image can be formed in various orientations in the bubble image, the accuracy of identifying the bubble image which is partially missing can be improved by using two reference line arrays having an intersecting relationship therebetween.

In an embodiment, the bubble determination condition includes an edge discrimination condition. The edge discrimination condition is defined such that when a direction of a contour line which satisfies a contrast threshold condition extends at a fixed range of angles with respect to a reference line direction (for example, when the direction of the contour line has an angle close to a perpendicular angle with respect to the reference line direction), the contour line is determined as an edge. Applying the edge discrimination condition can reduce a possibility that a foreign object, such as a fiber, having a curved shape is erroneously identified as an edge.

In an embodiment, the bubble determination condition includes an edge interval condition. The edge interval condition is a condition applied to two edge intervals determine by two edge pairs. In the embodiment, the edge interval condition is satisfied when a difference between the two edge intervals is in a predetermined range. It is recognized that a bubble image tends to have a small difference between a first edge interval, which is an interval (distance) between two edges constituting a first edge pair in the bubble image, and a second edge interval, which is an interval (distance) between two edges constituting a second edge pair in the bubble image. The above-described configuration is designed to use such a tendency of the bubble image for enhancing the accuracy of identifying the bubble image. It should be noted that the bubble identifying device may be utilized for applications other than foreign object detection. For example, the bubble identifying device may be used in a case where identification of a bubble in a liquid is required.

A bubble identifying method according to an embodiment includes a setting step and an identifying step. In the setting step, a plurality of reference lines are set on a blob in an image. In the identifying step, the blob is identified as a bubble image when n brightness distributions (where n is an integer greater than or equal to 1) among a plurality of brightness distributions on the plurality of reference lines satisfy a bubble determination condition. The bubble determination condition includes an edge pair condition. The edge pair condition is a condition which requires that two edge pairs are contained in a brightness distribution of interest.

The bubble identifying method described above may be implemented on an information processor. In this case, a program to implement the bubble identifying method is installed in the information processor via a network or a portable storage medium. A target image may be displayed for a user. In this case, the plurality of reference lines to be set on a blob-by-blob basis may be displayed on the target image. In this case, it becomes possible for the user to check whether a blob identification process has been appropriately performed. A computer, a bubble identifying device, a foreign object detecting system, and the like are encompassed in the concept of the information processor. The information processor includes a non-transitory storage medium for storing a program.

A foreign object detecting system according to an embodiment includes an imaging device configured to capture an image of an inspection target, and a processor configured to process the image acquired by the imaging device. The processor preprocesses the image to exclude any non-floating blob, sets a reference line set on a floating blob in the preprocessed image, identifies the floating blob as a bubble image when n brightness distributions (where n is an integer greater than or equal to 1) in a brightness distribution set on the reference line set satisfy a bubble determination condition, and determines the floating blob as a foreign object image when the floating blob is not identified as a bubble image. The bubble determination condition includes an edge pair condition. The edge pair condition is a condition which requires that two edge pairs are contained in a brightness distribution of interest.

At the time of capturing the image, a backlight may be used. In this case, the image can be acquired in the form of a silhouette image. Various methods may be used for an operation to exclude any non-floating blobs resulting from flaws and soils on a container.

### (2) Detailed Explanation of Embodiment

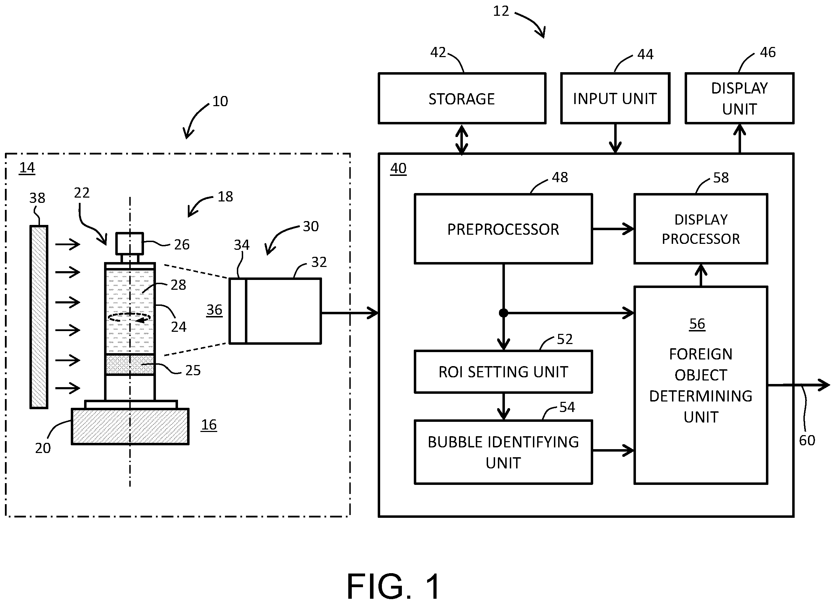

FIG. 1 shows a foreign object detecting system according to an embodiment. The foreign object detecting system has a bubble identifying function. In other words, the foreign object detecting system includes a bubble identifying device. The foreign object detecting system is used, for example, in an inspection process in a pharmaceutical factory to detect a foreign object in a medicament. In this case, the medicament is a liquid medicament. The foreign object may include a metal piece, a resin piece, a rubber piece, a fiber, and the like. The size of a foreign object which can be a target of detection is 50 µm to several millimeters, for example. Foreign objects having sizes below the range of 50 µm to several millimeters or having sizes larger than that range may be the target of detection. Various foreign object detecting schemes may be performed simultaneously or stepwise. Foreign objects contained in drinking water, a chemical agent, or the like may be detected by the foreign object detecting system.

The foreign object detecting system includes a measuring unit 10 and an information processor 12. The measuring unit 10 has a casing 14, and a transport line 16 for transporting a series of syringes is installed in the casing 14. A predetermined site on the transport line 16 is an image capturing location 18. An imaging device 30 is disposed at the image capturing location 18. In the illustrated example, a syringe 22 being an inspection target is placed on a base 20 configured to have a rotating function. The syringe 22 is a container in which a medicament 28 is stored. Another container for storing a medicament includes a vial and an ampoule, for example.

The syringe 22 has a main body 24, a stopper (internal sealing plug) 25, and a cap (external sealing plug) 26. The medicament is stored inside the main body 24. The main body 24 is formed of a transparent material, such as, for example, a resign or glass. Components for fixing the syringe 22 to the base 20 are not shown in the diagram.

The imaging device 30 includes a camera 32, a lens 34, a backlight 38, and other components. The backlight 38 is configured to illuminate the syringe 22 from behind with parallel light. In the illuminated state, a silhouette image of the medicament 28 within the syringe 22 is captured by the camera 32. A field of view 36 of the camera 32 covers the entire area of the medicament 28. The silhouette image is a monochrome image, while an image to be acquired may be a color image. Images of two or more syringes may be simultaneously captured by the camera 32. A polarizing plate may be disposed between the syringe 22 and the backlight 38, and a polarizing plate may be disposed between the syringe 22 and the camera 32.

In the embodiment, the syringe 22 is rotatably driven about a center axis of the syringe 22 by the base 20, and rotation of the syringe 22 is subsequently stopped, to thereby form a stationary state of the syringe 22. In that stationary state, the medicament 28 is maintained in a rotating state by an inertial force. Images of the medicament 28 being in the rotating state are intermittently captured by the camera 32. In this way, an original image sequence (frame sequence) consisting of a plurality of images arranged in chronological order is acquired. Each of original images constituting the original image sequence is processed as a target of image processing.

The information processor 12 functions as a bubble identifying device or a foreign object detecting device. The information processor 12 includes a processor 40 configured to execute a program, a storage 42, an input unit 44, and a display unit 46. The storage 42 is composed of a semiconductor memory, for example. The input unit 44 is composed of a keyboard or the like, and the display unit 46 is composed of an LCD (Liquid Crystal Display) or the like. The input unit 44 and the display unit 46 may constitute a touch screen panel. The processor 40 is composed of a CPU (Central Processing Unit) or the like.

In FIG. 1, a plurality of functions implemented by the processor 40 are represented by a plurality of blocks. A preprocessor 48 performs preprocessing on each of the original images constituting the original image sequence. The preprocessing includes a process to remove a non-floating object image corresponding to a flaw or a soil that has occurred on the main body 24 of the syringe 22, a process to extract a floating object image, and other processes. Specifically, the preprocessing includes subtraction, binarization, dilation and erosion, labeling, and the like. Each of isolated lumps contained in a preprocessed target image is hereinafter referred to as a blob (Blob).

An ROI setting unit 52 sets a region of interest (ROI: Region of Interest) in each of blobs contained in the preprocessed target image. Setting of the ROI may be omitted, and identification of a bubble image and other processes may be performed without using the ROI.

A bubble identifying unit 54 functions as setting means (the setting unit) and identification means (the identifying unit). The bubble identifying unit 54 performs a blob analysis with respect to each of regions of interest having been set on the target image. Specifically, in the blob analysis, whether or not a blob is a bubble image is determined. During the analysis, as described below, a set of reference lines are set on each of the regions of interest, and a brightness distribution on each of the reference lines is evaluated. When a brightness distribution specific to bubble images is determined to exist, the blob is identified as a bubble image. When any brightness distribution specific to bubble images is not determined to exist, such a determination result is sent to a foreign object determining unit 56.

The foreign object determining unit 56 determines a blob as a foreign object image when the blob is not determined as a bubble image. In such determination, other information may be referred to, in addition to the identification result obtained by the bubble identifying unit 54. For example, a result of evaluating the shape of the blob may be referred to. When the foreign object image is determined; i.e., when a foreign object is detected, a control signal 60 for transporting the syringe 22 having been inspected to a predetermined management area is output. When the foreign object is detected, the result of detection of the foreign object may be displayed on the display unit 46.

A display processor 58 is configured to generate an image to be displayed on the display unit 46. Each of the images captured by the camera 32 may be displayed on the display unit 46. In this case, foreign object images may be identifiably displayed in the images. For example, foreign objects may be displayed in a particular color. Bubble images may be identifiably displayed.

Because each of the images acquired during rotation of the medicament is a target image to be processed, even when a bubble image and a foreign object image are overlapped by chance with each other in one of the images, the bubble image and the foreign object image are shown in a separated state in other captured images. Therefore, accuracy of foreign object detection can be improved.

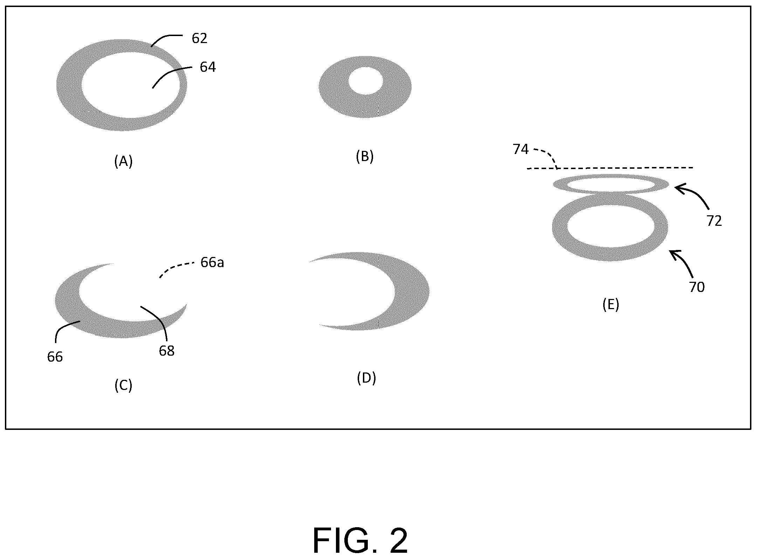

FIG. 2 shows a variety of bubble images which can be observed. A bubble image shown as (A) is composed of an outer section 62 and an inner section 64. The outer section 62 represents a low brightness region (for example, a region which has values of 0 after binarization), and the inner section 64 represents a high brightness region (for example, a region which has values of 1 after binarization). In the outer section 62, a surface layer or a contour line of a bubble is imaged, and in the inner section 64, an inside area; i.e., an air layer of the bubble, is imaged. The outer section 62 has an annular form without having any missing part. The inner section has an elliptic form without adjoining to a background (external region). Also, in bubble images shown as (B) to (E), gray sections represent low brightness regions, and white sections represent high brightness regions. The bubble image shown as (B) is also composed of an annular outer section and an elliptic inner section as in the case of the bubble image shown as (A). The outer region has a relatively greater thickness.

The bubble image shown as (C) is composed of an outer section 66 which is partially missing, and an inner section 68 surrounded by the outer section 66. Reference letter 66a represents a missing part of the outer section 66. The inner section 68 communicates with the background (external region) via the missing part 66a. In general, an outer section having a missing part is formed in a letter C shape, a letter U shape, a semicircular shape, an arc shape, or the like. The bubble image shown as (D) is also composed of an outer section having a missing part and an inner section surrounded by the outer section, as in the case of the bubble image shown as (C).

The bubble image shown as (E) has a special form (similar to the shape of a numeric character 8) and consists of a true bubble image 70 and a false bubble image 72. The false bubble image 72 is formed of a reflection of the true bubble image 70 that is reflected from a liquid surface 74. In a case where the false and true bubble images are adjoined to each other in a captured image, the bubble image shown as (E) is created.

All of the bubble images have the outer section and the inner section which can be distinguished from each other based on brightness values. In other words, a common brightness pattern (two-dimensional structure) specific to a plurality of bubble images can be observed. Noticeable brightness differences occur at a boundary between an outer section and a background, and a boundary between the outer section and an inner section. Even in a case where a gray-scale image, which is not a binary image, is used as a processing target, because changes in brightness occurring inside the outer section and inside the inner section are considerably smaller than the brightness difference at any boundary, it is possible to clearly distinguish such mere changes in brightness from the brightness difference at the boundary.

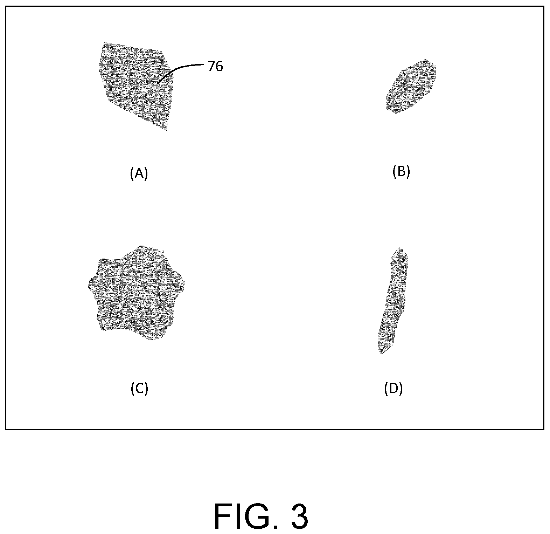

FIG. 3 shows a variety of foreign object images which can be observed. Also, in FIG. 3, gray sections represent low brightness regions, and a white section (background) represents a high brightness region. An inside region 76 of a foreign object image shown as (A) has a uniform level of brightness (low brightness). All of a foreign object image shown as (B), a foreign object image shown as (C), and a foreign object image shown as (D) have uniform levels of brightness (low brightness). None of the foreign object images has any two-dimensional structure in their inside regions, and brightness patterns in the inside regions are monotonous. The bubble image and the foreign object image can be distinguished from each other based on a difference between the brightness patterns of the bubble image and the foreign object image. In other words, the brightness pattern specific to bubble images can be used to identify a bubble image.

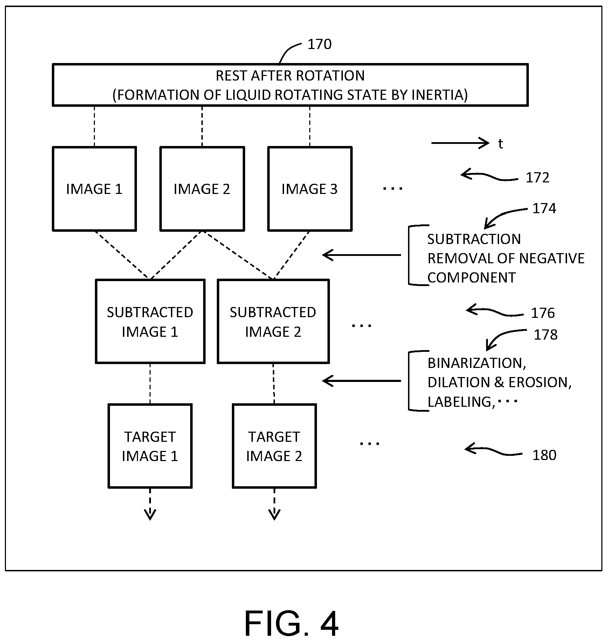

FIG. 4 shows details of the preprocess. As indicated by reference numeral 170, after the syringe is rotated, rotation of the syringe is terminated, to create a state where only a liquid within the syringe is rotating. In this state, an original image sequence 172 is acquired by continuously capturing images of the syringe. The horizontal axis represents a temporal axis t.

A first process 174 is applied to each set of two adjacent original images. The first process 174 includes subtraction, removal of negative components, and other operations. In the embodiment, a chronologically later one of the two adjacent original images is defined as an image of interest, and a chronologically earlier one of the two adjacent original images is defined as a reference image. A subtraction is performed between the image of interest and the reference image. When a low brightness region rather than a high brightness region is extracted, for example, the image of interest is subtracted from the reference image. Then, negative components in a subtracted image created by the subtraction are removed (or negative components are ignored in the process of the subtraction). In the first process 174, any non-floating object images resulting from a flaw and a soil having been present on the syringe are removed from the subtracted image (and the background is simultaneously removed), and only floating object images corresponding to bubbles or foreign objects are maintained. Other methods may be employed for causing only floating object images to remain. Instead of the immediately preceding original image, the first original image located at the beginning of a sequence, for example, may be used as the reference image. As a result of the first process 174 described above, a subtracted image sequence 176 is generated from the original image sequence 172.

A second process 178 is applied to each of subtracted images constituting the subtracted image sequence 176. The second process 178 includes binarization (reverse binarization), dilation and erosion, labeling, and other processing. Individually separated blobs are extracted by the labeling. Specifically, the individually separated blobs are numbered and managed by numbers. For example, blob numbers, center coordinates, width sizes, height sizes, and other properties are managed on a blob-by-blob basis. A target image sequence 180 is generated from the subtracted image sequence 176.

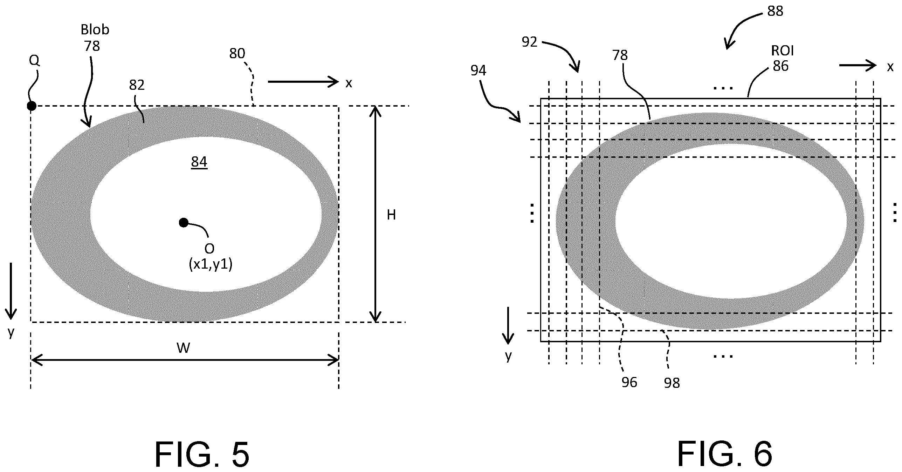

A bubble identifying method is explained with reference to FIGs. 5 to 10. Processes described below are performed on the blob-by-blob basis.

In FIG. 5, a blob 78 has an outer section 82 and an inner section 84. In the illustrated example, the outer section 82 is a region having the value 0, and the inner section is a region having the value 1. The blob 78 is identified by center coordinates O, a width size W, and a height size H. Reference numeral 80 represents a graphical indication of a rectangle circumscribing the blob 78. Rather than the width size W and the height size H, coordinates Q of the upper left corner of the rectangle 80 may be used for management. It should be noted that the x direction corresponds to the horizontal direction in the image, and the y direction corresponds to the vertical direction in the image.

As shown in FIG. 6, an ROI 86 surrounding the blob 78 without contacting therewith is defined based on the center coordinates O, the width size W, and the height size H. For example, i pixels may be set as a margin, where i represents an integer greater than or equal to 1. A reference line set 88 is set to the ROI 86. It can be understood that the reference line set 88 is set to the blob 78. The reference line set 88 is composed of a first reference line array 92 and a second reference line array 94.

The first reference line array 92 is composed of a plurality of reference lines 96 which are parallel to the y direction. The plurality of reference lines 96 are arranged side by side at a uniform interval along the x direction. The first reference line array 92 covers the entire area of the ROI 86 in the x direction. The second reference line array 94 is composed of a plurality of reference lines 98 which are parallel to the x direction. The plurality of reference lines 98 are arranged side by side at a uniform interval. The second reference line array 94 covers the entire area of the ROI 86 in the y direction.

The plurality of reference lines 96 and the plurality of reference lines 98 may be positioned at non-uniform intervals, or may be positioned so as to be concentrated in an area where it is highly possible that an inner section is present. The plurality of reference lines 96 and the plurality of reference lines 98 are arranged at a pitch of one pixel, for example. The size of the pitch may be defined to be changeable by a user or automatically.

In practice, the reference lines constituting the reference line set 88 are sequentially set to a blob one by one. When a bubble determination condition, which will be described below, is satisfied in the process of setting the reference lines, the blob is identified as a bubble image. At this point in time, the process of setting a new reference line on the blob is terminated. It should be noted that each of the reference lines is generally set within the ROI (edge detection, which will be described below, is performed within the ROI), while each of the reference lines is prominently drawn in each of the diagrams.

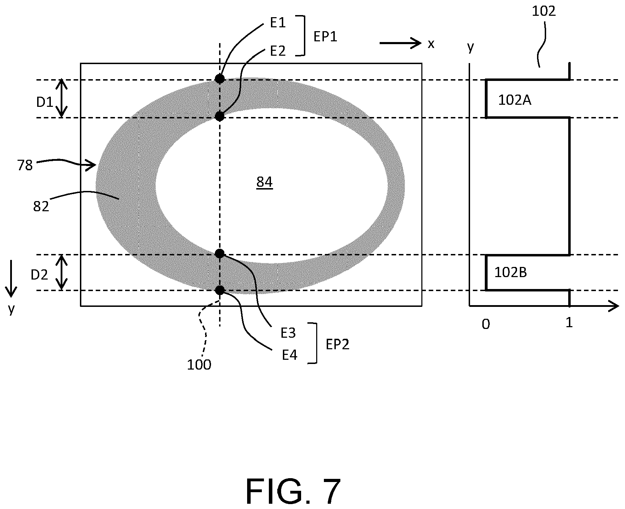

As shown in FIG. 7, edge detection is repeatedly performed on each of the reference lines from its one end to the other end. The edge detection is performed at a pitch of one pixel, for example. For the edge detection, an edge detection filter may be utilized.

For example, when the edge detection is successively performed on a reference line 100 from the top to the bottom, four edges (boundary points) E1, E2, E3, and E4 of the blob 78 are detected as a result of the edge detection. The edge E1 is located at a boundary between the background and the outer section 82, and the edge E2 is located at a boundary between the outer section 82 and the inner section 84. The edge E3 is located at a boundary between the inner section 84 and the outer section 82, and the edge E4 is located at a boundary between the outer section 82 and the background. The edges E1 and E2 form a first edge pair EP 1, and the edges E3 and E4 form a second edge pair EP2.

FIG. 7 shows a brightness distribution 102 on the reference line. In the illustrated example, because the target to be processed is a binarized image, each of values forming the brightness distribution 102 is 1 or 0. Depressions indicated by reference signs 102A and 102B correspond to the outer section (low brightness region). In a case where an image to be processed is a gray-scale image, it is also possible to detect the two edge pairs EP1 and EP2.

In the embodiment, the bubble determination condition includes the edge pair condition. The edge pair condition is a condition which requires that the brightness distribution on the reference line of present interest includes two edge pairs. In the example shown in FIG. 7, because the two edge pairs EP1 and EP2 are contained on the reference line 100, the edge pair condition is satisfied. In a case where the bubble determination condition includes only the edge pair condition, the blob is identified as a bubble image at the time when the edge pair condition is satisfied.

In FIG. 7, an interval (distance) between the edges E1 and E2 forming the first edge pair EP1 is indicated as D1, and an interval (distance) between the edges E3 and E4 forming the second edge pair EP2 is indicated as D2. In a case where a blob is a bubble image, a certain degree of symmetry is recognized. When the reference lines are set so as to be orthogonal to the outer section 82, the edge intervals D1 and D2 become closer to each other. Therefore, an edge interval condition may be added to the bubble determination condition in order to enhance the accuracy of bubble image identification. For example, it may be determined that the edge interval condition is satisfied when a difference ΔD between the edge interval D1 and the edge interval D2 is smaller than a predetermined value. In this case, a blob is determined as a bubble image only when the edge pair condition is satisfied, and the edge interval condition is also satisfied.

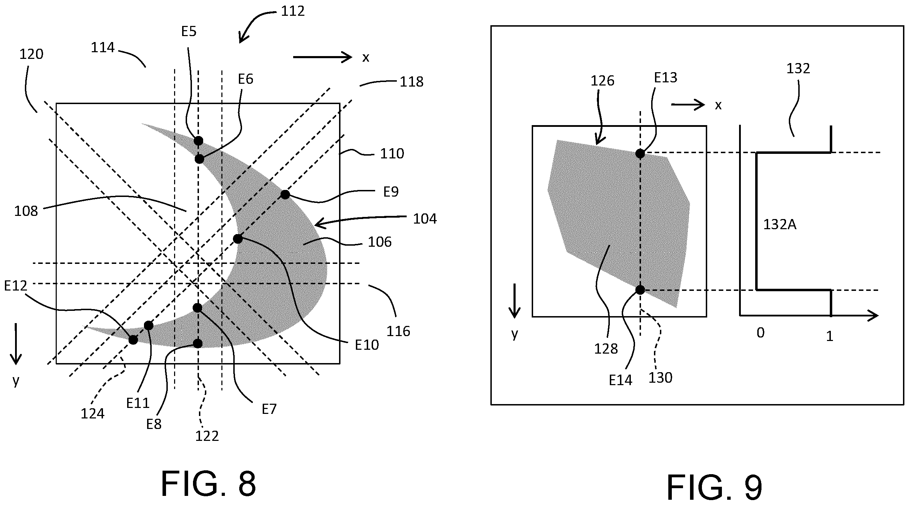

FIG. 8 shows another reference line set 112. An ROI 110 is defined so as to surround a blob 104. The blob 104 is composed of an outer section 106 being the low brightness region and an inner section 108 being the high brightness region. The outer section 106 has a crescent shape with a large missing part. The inner section 108 communicates with the background. For the purposes of correctly determining the thusformed blob 104 as a bubble image, and in particular, correctly identifying the bubble image irrespective of orientations that the missing part of the blob can have, it is desirable to set, on the blob 104, the reference line set 112 having greater versatility.

The reference line set 112 consists of a first reference line array 114, a second reference line array 116, a third reference line array 118, and a fourth reference line array 120. In FIG. 8, each of the reference line arrays 114 to 120 is only partially illustrated. The first reference line array 114 is composed of a plurality of reference lines which are parallel to the y direction and are arranged side by side along the x direction. The second reference line array 116 is composed of a plurality of reference lines which are parallel to the x direction and are arranged side by side along the y direction. The third reference line array 118 is composed of a plurality of reference lines which are parallel to a +45 degree tilting axis tilted by +45 degrees in a clockwise direction relative to the y direction, and are arranged side by side in a direction of a -45 degree tilting axis tilted by -45 degrees in the clockwise direction (tilted by +45 degrees in a counterclockwise direction) relative to the y direction. The fourth reference line array 120 is composed of a plurality of reference lines which are parallel to the -45 degree tilting axis and are arranged side by side along the +45 degree tilting axis.

For example, four edges E5 to E8 are detected on a reference line 122; i.e., two edge pairs are detected. Also on a reference line 124, four edges E9 to E12 are detected; i.e., two edge pairs are detected. When the edge pair condition is satisfied in any one of the reference lines constituting the reference line set, the blob 104 is identified as a bubble image. In a case where the bubble determination condition includes the edge interval condition, the number of reference line arrays constituting the reference line set may be increased. Alternatively, a reference line set composed of a plurality of reference lines radially extending from a center point of the blob or another reference point may be used.

FIG. 9 shows a blob 126 corresponding to a foreign object image. The entire image including the blob is binarized. A ROI surrounding the blob 126 is defined. An interior section 128 of the blob 126 has a uniform level of brightness (low brightness). A reference line set is established on the blob 126. In the reference line set, attention is focused on a reference line 130. FIG. 9 shows a brightness distribution 132 on the reference line 130. A depression 132A corresponds to the interior section (low brightness region) 128 of the blob 126. Only two edges E13 and E14 are detected on the reference line 130. Because the edge pair condition is not satisfied, the bubble determination condition is not satisfied. When none of the reference lines constituting the reference line set satisfies the bubble determination condition, the blob is determined as a foreign object image. As a matter of course, other information may be additionally considered to determine the foreign object image.

As described above, the bubble identifying method according to the embodiment is designed on the precondition that the brightness pattern in a bubble image differs from the brightness pattern in a foreign object image, to determine whether or not a blob is a bubble image, by analyzing arrangement of edges on each of a plurality of reference lines being set on the blob. In a case where the orientation and the form of a blob can be previously identified, a single reference line may be set to the blob at an appropriate location and at an appropriate tilting angle. Then, whether or not the blob is a bubble image may be determined using the single reference line.

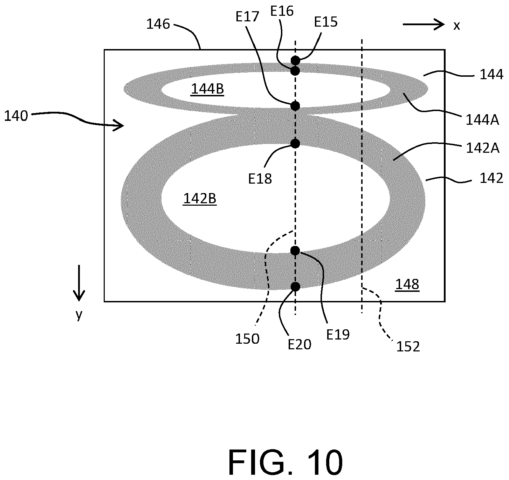

FIG. 10 shows a blob 140 having a special form. An ROI 146 is defined so as to surround the blob 140. The blob 140 is composed of a first section 142 and a second section 144 which are interconnected. The first section 142 corresponds to a true bubble image, and the second section 144 corresponds to a false bubble image created by reflection from a liquid surface. The first section 142 is composed of an outer section 142A being the low brightness region, and an inner section 142B being the high brightness region. The second section 144 is also composed of an outer section 144A being the low brightness region and an inner section 144B being the high brightness region. A region outside the blob 140 is a background section 148 being the high brightness region.

A reference line set is set to the blob 140. When a reference line 150 is set, for example, edge detection is repeatedly performed on the reference line 150. As a result, six edges E15 to E20 are detected. Since the detected edges include two edge pairs, the edge pair condition is satisfied. When a reference line 152 is set, a similar result is obtained. However, in a case where such a special blob shown in FIG. 10 is present, it may be considered that the accuracy of bubble identification will be decreased. When the number of edge pairs on a reference line is greater than or equal to 3, an indication for drawing attention may be displayed.

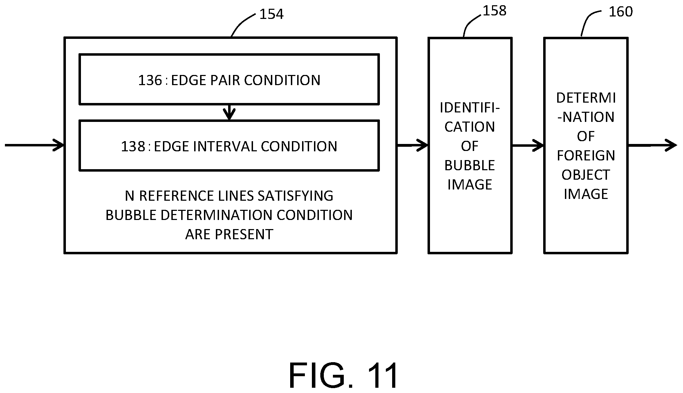

In FIG. 11, a foreign object determining method according to an embodiment is summarized. Whether or not the blob is a bubble image, in other words, whether or not the blob is a foreign object image, is determined on a blob-by-blob basis. Specifically, it is determined whether or not a bubble determination condition 154 is satisfied. In the illustrated example, the bubble determination condition 154 includes an edge pair condition 136 and an edge interval condition 138. The bubble determination condition is satisfied only when both of the edge conditions are simultaneously satisfied. In practice, when n reference lines satisfying the bubble determination condition are present, the blob is identified as a bubble image (see reference numeral 158) where n is 1, for example, or n may be a numeric value greater than or equal to 2. When the blob is not identified as a bubble image, that blob is determined as a foreign object image (see reference numeral 160). Other information may be referred to, in order to identify a bubble image and determine a foreign object image. For example, an outside shape, a size, and other properties of the blob may be taken into account.

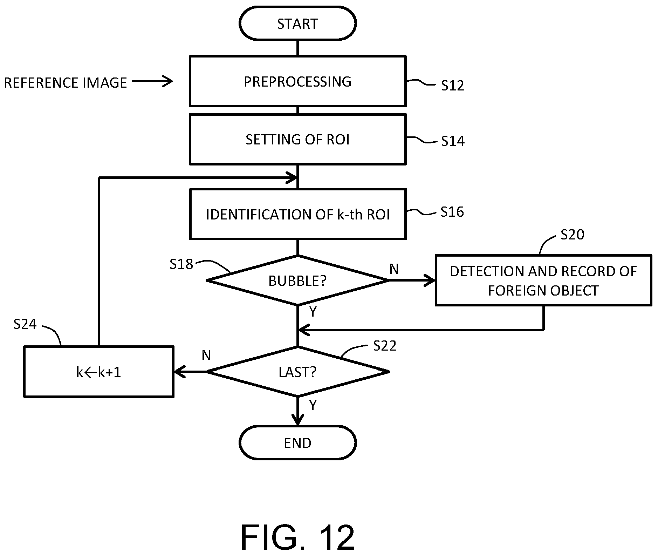

In FIG. 12, operation of the foreign object inspecting system, in particular, specific processes in image processing, are shown in the form of a flowchart. Image processing is performed on each of images acquired by a camera. In step S12, preprocessing is applied to an original image. To prevent erroneous detection of a flaw or a soil existing on a syringe, a reference image, such as an image of a previous frame, is utilized, and a subtracting calculation is performed to find a difference between the original image and the reference image. The resulting subtracted image is processed by labeling and other operations, to generate a target image which may contain one or more blobs. In step S14, an ROI is defined for each of the blobs in the target image. Process steps from S16 and onward are performed on an ROI-by-ROY basis; i.e., on a blob-by-blob basis.

In step S16, a k-th ROI is determined, and in step S18, it is identified whether or not a blob in the k-th ROI is a bubble image. When it is a bubble image, step S22 is performed, and when it is not a bubble image, the blob is determined as a foreign object image in step S20. That is, a foreign object is detected. The event that the foreign object is detected is recorded, and necessary control operation is performed. In step S22, it is determined whether or not processing is completed until the last ROI, and when NO is determined, the steps from S16 onward are repeatedly performed after incrementing k by one in step S24.

Although the inspection target has been the medicament in the above-described embodiment, the above-described configuration may be used to perform foreign object detection on other inspection targets.

## Claims

1. A bubble identifying device, comprising:
a setting unit configured to set at least one reference line on a blob in an image, the at least one reference line traversing the blob; and
an identifying unit configured to identify the blob as a bubble image when a brightness distribution on the at least one reference line satisfies a bubble determination condition,
wherein the bubble determination condition comprises an edge pair condition, and
the edge pair condition is a condition which requires that two edge pairs are contained in a brightness distribution of interest.

2. The bubble identifying device according to claim 1, wherein:
the setting unit is configured to set a reference line set comprising a plurality of reference line arrays which have a traversing relationship with the blob; and
the identifying unit is configured to identify the blob as a bubble image when n brightness distributions in a brightness distribution set on the reference line set satisfy the bubble determination condition, where n is an integer equal to or greater than 1.

3. The bubble identifying device according to claim 2, wherein the reference line set comprises:
a first reference line array comprising a plurality of reference lines which are parallel to a first direction, and
a second reference line array comprising a plurality of reference lines which are parallel to a second direction intersecting the first direction.

4. The bubble identifying device according to claim 1, wherein
the bubble determination condition comprises an edge interval condition; and
the edge interval condition is a condition for two edge intervals which are determined by the two edge pairs.

5. The bubble identifying device according to claim 4, wherein
the edge interval condition is satisfied when a difference between the two edge intervals is within a predetermined range.

6. A bubble identifying method, comprising steps of:
setting a plurality of reference lines on a blob in an image; and
identifying the blob as a bubble image when n brightness distributions among a plurality of brightness distributions on the plurality of reference lines satisfy a bubble determination condition, where n is an integer greater than or equal to 1; wherein
the bubble determination condition comprises an edge pair condition, and
the edge pair condition is a condition which requires that two edge pairs are contained in a brightness distribution of interest.

7. A foreign object detecting system, comprising:
an imaging device configured to capture an image of an inspection target; and
a processor configured to process the image acquired by the imaging device,
wherein
the processor is configured to
preprocess the image to exclude a non-floating blob;
set a reference line set on a floating blob in the preprocessed image;
identify the floating blob as a bubble image when n brightness distributions in a brightness distribution set on the reference line set satisfy a bubble determination condition, where n is an integer greater than or equal to 1; and
determine the floating blob as a foreign object image when the floating blob is not identified as a bubble image, wherein
the bubble determination condition comprises an edge pair condition, and
the edge pair condition is a condition which requires that two edge pairs are contained in a brightness distribution of interest.
